# FASCICULE DE BREVET EUROPEEN

(11) **EP 3 252 652 B1**
(45) Date de publication et mention de la délivrance du brevet: **14.07.2021**
(21) Numéro de dépôt: 17173587.1
(22) Date de dépôt: 30.05.2017
(51) Int. Cl.: G06F 21/86, G06K 7/00, G07F 19/00

(54) **CORPS DE LECTEUR DE CARTE À MÉMOIRE SÉCURISÉ**
KÖRPER EINES KARTENLESEGERÄTS MIT GESICHERTEM SPEICHER
CARD READER BODY WITH SECURE MEMORY

(30) Priorité: 31.05.2016 FR 1654938
(43) Date de publication de la demande: 06.12.2017
(73) Titulaire: INGENICO GROUP, 75015 Paris (FR)
(72) Inventeur: PAVAGEAU, Stéphane, 26600 Le Roche de Glun (FR); JADEAU, Johann, 26000 Valence (FR)
(74) Mandataire: Vidon Brevets & Stratégie

(56) Documents cités:
- EP-A1- 2 793 537
- FR-A1- 2 992 094
- FR-A1- 2 997 530
- GB-A- 2 411 756

## Description

### 1. Domaine de l'invention

L'invention se situe dans le domaine des lecteurs de carte à mémoire. L'invention a plus particulièrement comme objet un lecteur de carte à mémoire destiné à être monté dans un terminal de lecture de cartes à mémoire. Un tel terminal peut être un terminal de paiement, un terminal d'identification. Plus généralement, l'invention se rapporte à tout type de terminal pouvant comprendre un lecteur de carte à mémoire.

### 2. Art Antérieur

Les terminaux de lecture de cartes à mémoire comprennent, outre un lecteur de cartes à mémoires, un certain nombre de composants tels qu'un clavier, un écran, un ou plusieurs processeurs, de la mémoire, une source d'alimentation électrique. Depuis plusieurs années, les terminaux de lecture de cartes à mémoire ont vu leurs fonctions être multipliées. Ceci est particulièrement vrai pour les terminaux de paiement. Outre la fonction de paiement, les terminaux embarquent des fonctions de communication en réseau, des fonctions de détection de cartes à mémoire sans contact (cartes « contactless »), des fonctions de gestion de coupons (par exemple des coupons de fidélité), etc.

En plus de la multiplication de telles fonctions auxiliaires, les terminaux de lecture de cartes à mémoire doivent en plus être résistants aux diverses attaques ou tentatives de fraudes dont ils font fréquemment l'objet. Afin d'obtenir une homogénéité de la résistance des terminaux aux attaques, des normes internationales ont été édictées. Dans le domaine du paiement, par exemple, la norme PCI PED (« *Payment Card Industry* - *Pin Entry Device »)* édicte des exigences en matière d'intrusion et de détection des tentatives d'attaques sur les terminaux. Il ne s'agit pas de la seule norme en vigueur.

Cependant, du fait de ces normes, les terminaux qui étaient antérieurement peu protégés laissent progressivement la place à des terminaux de plus en plus sécurisés. Parmi les points de sécurisation des terminaux, les industriels du secteur veillent plus particulièrement à la protection du lecteur de carte à mémoire. Le lecteur de carte à mémoire, en effet, reste un maillon faible du terminal de lecture de carte à mémoire. Ceci est dû au fait que le lecteur de carte à mémoire comprend une fente d'insertion de la carte à mémoire, cette fente rendant l'intérieur du terminal accessible depuis l'extérieur. Plus particulièrement, des attaquants cherchent à se procurer un accès au connecteur de carte à mémoire. Le connecteur de carte à mémoire est la partie du lecteur de carte à mémoire qui entre en contact avec la puce ou le microprocesseur embarqué sur la carte à mémoire. Lorsqu'un attaquant parvient à avoir accès à ce connecteur de carte à mémoire sans que quiconque s'en aperçoive, il est alors possible d'intercepter et de lire les données qui sont échangées entre la puce ou le microprocesseur de la carte et le processeur du terminal de lecture de carte à mémoire. Parmi les données interceptées, on peut notamment citer le code secret saisi par le client lors de la demande de code secret, qui peut être véhiculé sans cryptage, sur certaines cartes à puce.

Ceci explique que de nombreux efforts ont été portés à la sécurisation du lecteur de carte à mémoire. Ainsi, par exemple, les lecteurs de carte à mémoire ont été pourvus d'une protection avec treillis. Cette protection permet d'éviter une introduction par perçage du terminal. Lorsqu'un objet tente de pénétrer dans l'enceinte de protection, un court-circuit est produit entraînant alors une mise hors service du terminal.

Par ailleurs, des modifications visant à protéger les connecteurs de carte à mémoire contre les décharges électrostatiques et contre l'usure ont également été proposées. Il s'agit *par exemple* de disposer, à l'entrée du lecteur de carte à mémoire, de pièces métalliques assurant le guidage mécanique (prévention contre l'usure) et/ou la décharge de la carte préalablement à son insertion dans le lecteur de carte à mémoire. Communément, ces pièces métalliques se présentent sous la forme de tiges métalliques de guidage de quelques millimètres de hauteur. Un autre exemple consiste à ajouter des pièces métalliques qui se présentent sous la forme d'un peigne de décharge de la carte.

Toutes ces modifications ont entrainé une complexité de fabrication importante. Par ailleurs, le coût de fabrication a également augmenté. Actuellement, les exigences normatives en matière de sécurité sont telles qu'il est nécessaire de prévoir, pour la fabrication d'un terminal de lecture, de nombreuses étapes qui mêlent à la fois les soudures échelonnées de composants, la nécessité de disposer de composants résistants à la refusion, etc. Outre la complexité de fabrication du terminal de lecteur de carte à mémoire, ces procédés rendent la maintenance des terminaux produits très complexe voire impossible, suscitant ainsi bien des difficultés pour les prestataires de services de maintenance autant que pour le fabricant du terminal de lecture de carte à mémoire.

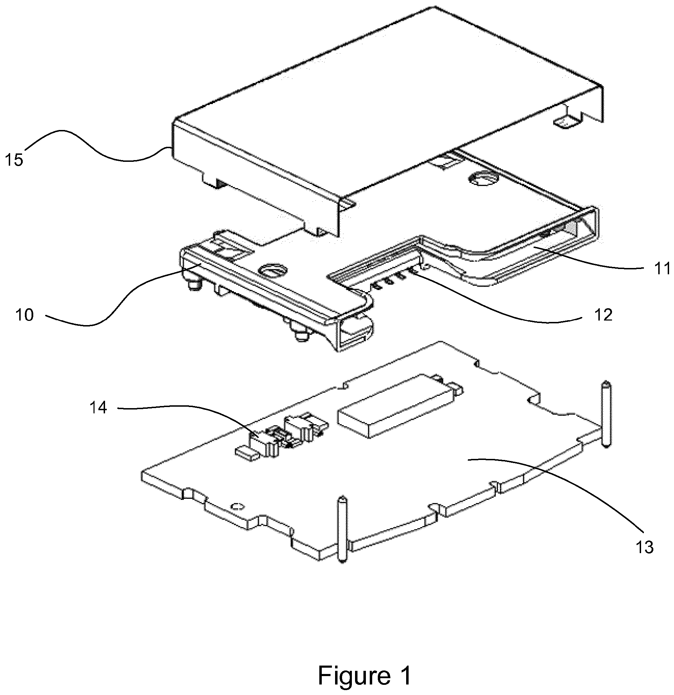

On décrit, en relation avec la figure 1, un assemblage classique d'un lecteur de carte à mémoire. Ce lecteur de carte à mémoire comprend un corps de lecteur de carte à mémoire 10, comprenant une fente d'insertion d'une carte à mémoire 11. Le connecteur de carte à mémoire est directement intégré au sein du lecteur de carte à mémoire. Il comprend des pins 12 de connexion au circuit imprimé (PCB) 13 (vue partielle). Le PCB 13 comprend également des composants électroniques 14. Pour protéger le lecteur de cartes à mémoire 10, celui-ci est recouvert d'une protection complète 15, ainsi que d'une protection frontale 15b.

Il était donc nécessaire de proposer une architecture de lecteur de carte à mémoire qui soit intrinsèquement sécurisée et ne nécessite pas de protection complémentaire. Une telle architecture a été divulguée dans la demande de brevet FR2997530, publiée le 02 mai 2014. Cette demande de brevet décrit plus particulièrement un corps de lecteur de carte à mémoire de forme globalement parallélépipédique rectangle comprenant une fente d'insertion d'une carte à mémoire, un tel corps de lecteur corps de lecteur comprend, sur une face postérieure, un logement de réception d'un connecteur de carte à mémoire, ce logement de réception étant d'une forme volumique prédéterminée et comprenant une piste conductrice, qui prend la forme d'un treillis. Ce treillis est plus particulièrement réalisée avec la technique dite LDS. Cependant, cette technique présente des inconvénients, notamment de passage à l'échelle industrielle et de coûts : en effet, le fait de devoir tracer une piste en MID sur une pièce plastique existante, avec des formes et des volumes complexes est difficile, du fait de la difficulté d'accès, par le laser, à certaines zones. Ceci entraine notamment un allongement du temps nécessaire à la création de la pièce et une augmentation des coûts.

### 1. Résumé de l'invention

La présente technique permet de résoudre en partie les problèmes posés par l'art antérieur. La présente technique se rapporte en effet à un corps de lecteur de carte à mémoire selon la revendication 1.

Ainsi, comme le corps de lecteur de carte à mémoire étant constitué de deux parties, il est plus facile de tracer, sur la face interne du couvercle supérieur, la ou les pistes conductrices qui permettent d'assurer la sécurité du lecteur lorsque celui-ci est monté. Ainsi l'invention permet de faciliter le montage, tout en étendant les treillis de protection. En effet, de par la configuration du corps de lecteur de carte à mémoire, en deux partie distinctes, l'invention permet de souder d'abord le connecteur de carte à mémoire sur le PCB puis de fixer ensuite les deux parties du corps du lecteur de carte à mémoire sur le PCB en recouvrant le connecteur de carte à mémoire.

Selon une caractéristique particulière, le circuit de protection s'étend sensiblement sur toute la surface de la face interne du couvercle supérieur.

Selon une caractéristique particulière, le couvercle supérieur est de forme globalement parallélépipédique rectangle comprenant une surface principale, deux parois latérales et une paroi longitudinale, les parois latérales et la paroi longitudinale étant solidarisées à la surface principale par l'intermédiaire d'un pan coupé, le pan coupé comprenant, au niveau de chacune des parois latérales, au moins une lumière d'assemblage.

Selon une caractéristique particulière le couvercle inférieur est de forme globalement parallélépipédique rectangle comprenant une surface principale, deux parois latérales et une paroi longitudinale et en ce qu'il comprend, au niveau de chaque paroi latérale, au moins un ergot de solidarisation, qui est positionné en regard d'une lumière correspondante du couvercle supérieur.

Selon un mode de réalisation particulier, le couvercle inférieur est conformé pour s'emboiter dans le couvercle supérieur, chaque ergot de solidarisation du couvercle inférieur prenant place dans une lumière d'assemblage correspondante couvercle supérieur, l'ensemble formé par le couvercle supérieur et le couvercle inférieur étant maintenu par l'insertion, dans chaque lumière d'assemblage, d'un pion de blocage.

Selon une caractéristique particulière, le couvercle inférieur comprend au moins un dispositif de freinage de carte.

Selon une caractéristique particulière, le couvercle inférieur comprend au moins une zone de décharge électrostatique.

Selon un mode de réalisation particulier, ledit circuit de protection est réalisé par une technique de gravure au laser.

Selon une caractéristique particulière, le couvercle supérieur comprend au moins une zone de fragilité configurée pour être rompue lors d'une extraction non autorisée dudit couvercle supérieur.

Selon un mode de réalisation particulier, ledit circuit de protection se présente sous la forme d'au moins un treillis comprenant au moins une piste conductrice.

Selon un mode de réalisation particulier, ledit circuit de protection se présente sous la forme d'au moins une piste électrique continue.

Par exemple, cette piste peut être obtenue par l'utilisation de la technique dite MID *(« molded interconnected device »)* ou par d'autres procédés.

Selon un mode de réalisation particulier, caractérisé en ce que ledit circuit de protection est réalisé par une technique de gravure au laser.

Cette technique de gravure au laser est couplée à des bains chimiques et se nomme dite *« LDS »* (de l'anglais pour « *Laser Direct Structuring »).*

Selon une caractéristique particulière, ledit circuit de protection est un circuit imprimé flexible positionné au sein dudit logement de réception.

Selon une caractéristique particulière, ladite face postérieure dudit lecteur de carte à mémoire comprend au moins un logement complémentaire de réception d'au moins un composant électronique, et en ce que ledit logement complémentaire est positionné sous ledit circuit de protection.

Selon une caractéristique particulière, ledit au moins un circuit de protection est conformé pour définir des zones de décharges électrostatiques entrant en contact avec une carte à puce lors de l'introduction de ladite carte à puce dans ledit corps de lecteur.

L'invention se rapporte également à un terminal de lecture de carte à mémoire. Selon l'invention, un tel terminal comprend un corps du lecteur de carte à mémoire tel que décrit préalablement.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, déjà présentée, expose l'architecture classique d'un lecteur de carte à mémoire.
- La figure 2 illustre le principe général de l'invention à savoir la séparation du corps de lecteur en deux unités fonctionnelles distinctes ;
- La figure 3 illustre également le principe général de l'invention en séparant le corps du lecteur en deux parties distinctes ;
- La figure 3b représente le corps du lecteur selon un mode de réalisation ;
- La figure 4 présente la surface interne du couvercle supérieur qui contient un treillis de protection selon deux densités différentes ;
- La figure 5 présente la surface interne du couvercle inférieur, selon un mode de réalisation, dans lequel des freins de carte sont visibles ;
- Les figures 6, 7 et 8 illustrent l'assemblage et la fixation du corps de lecteur de carte à mémoire selon un mode de réalisation ;
- La figure 9 présente la surface interne du couvercle supérieur, selon un mode de réalisation ;
- la figure 10 (la vue de détail D), représente un détail, sur un point de faiblesse du couvercle supérieur, empêchant l'ouverture du lecteur, sans déclenchement des sécurités.

### 5. Description détaillée

### 5.1. Rappel du principe de l'invention.

Le principe général de l'invention consiste à proposer une architecture de lecteur de carte à mémoire qui intègre directement les contraintes fonctionnelles inhérentes au fonctionnement de ce type de dispositif. Plus particulièrement, le principe général de l'invention consiste à découper le lecteur de carte à mémoire en deux parties distinctes : une première partie par laquelle transitent les signaux de cartes à mémoire, ainsi que le switch de détection de présence carte, et pouvant assurer une partie de la décharge électrostatique, (il s'agit du connecteur de carte à mémoire) et une deuxième partie permettant l'insertion de la carte à mémoire, assurant d'une part le guidage et les reprises d'effort de la carte à mémoire, d'autre part une partie de la décharge électrostatique de la carte, et aussi une protection des signaux échangés entre la carte à mémoire et le connecteur de carte à mémoire (il s'agit du corps du lecteur de carte à mémoire proprement dit). Selon l'invention, le corps du lecteur de carte à mémoire proprement dit est divisé en deux parties distinctes, emboîtables l'une dans l'autre, afin de former un corps de lecteur de carte à mémoire complet : le corps comprend un couvercle supérieur de protection et un couvercle inférieur. Sur sa face interne, le couvercle supérieur de protection comprend un ou plusieurs circuits de protection qui s'étendent sur une portion significative de la surface.

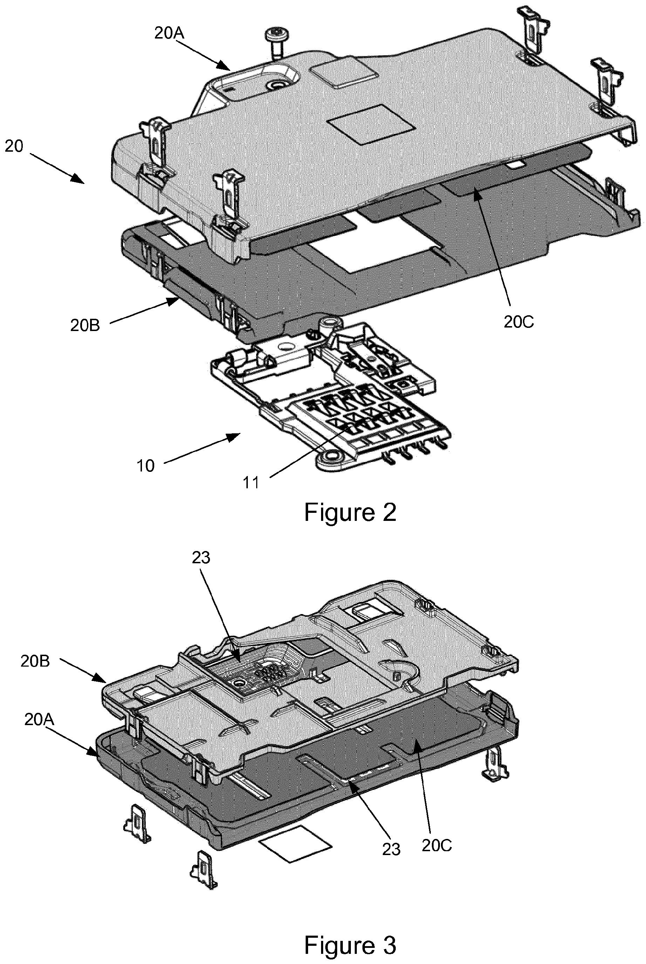

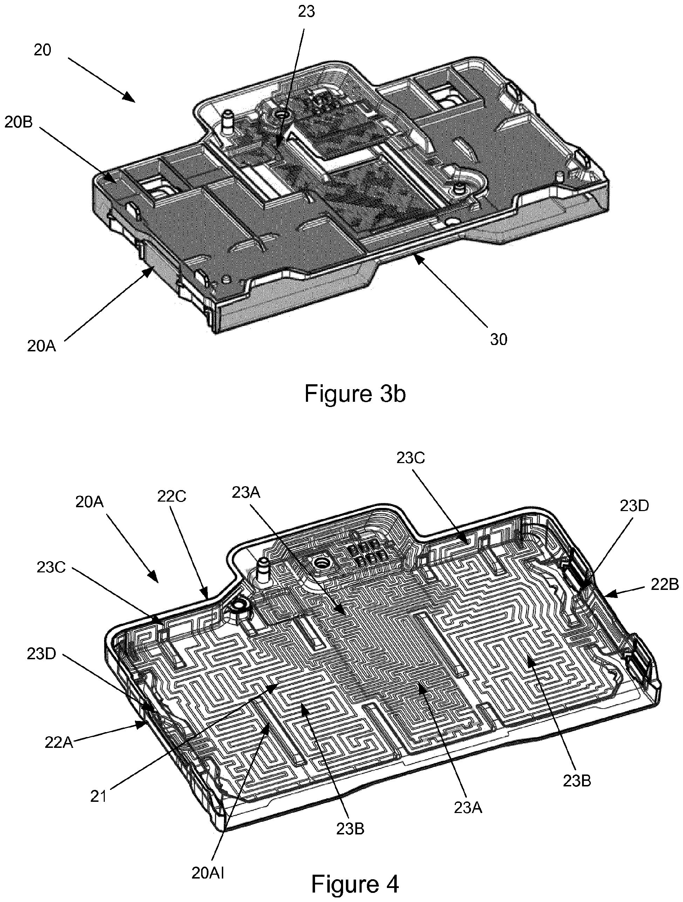

Le principe général de l'invention est décrit en relation avec les figures 2 et 3. Selon l'invention, un connecteur de carte à mémoire 10 est construit indépendamment d'un corps du lecteur de carte à mémoire 20. Le connecteur de carte à mémoire 10 est conçu afin de permettre une lecture des signaux émanant de la carte à mémoire (non représentée). Dans la figure 2, le connecteur de carte à mémoire 10 est conçu pour la lecture d'une carte à puce. Pour ce faire, le connecteur de carte à mémoire 10 comprend un certain nombre de pins 11 (huit sur la figure 3), permettant d'entrer en contact avec des zones correspondantes de la carte à mémoire (six ou huit zones en fonction de la carte à mémoire). Les pins 11 sont en général des lames ressort métalliques qui se positionnent sur la surface de la puce. L'objet de la divulgation n'étant pas ce connecteur, sa description détaillée ne sera pas réalisée plus avant.

Ce connecteur de carte à mémoire 10 est indépendant du corps du lecteur de carte à mémoire 20. Cela signifie que le connecteur de carte à mémoire 10 n'est pas assemblé avec le corps du lecteur de carte à mémoire 20 avant d'être assemblé au PCB du terminal de lecture. Ainsi on fixe le connecteur de carte à mémoire 10 en premier sur le PCB, puis ensuite on fixe le corps du lecteur de carte à mémoire 20 par-dessus le connecteur 10.

Selon l'invention, le corps du lecteur de carte à mémoire 20 comprend un couvercle supérieur de protection 20A, ledit couvercle supérieur 20A comprenant, sur sa face interne, au moins un circuit de protection 23 ; un couvercle inférieur 20B, comprenant le logement de réception de connecteur de carte à mémoire 10.

Astucieusement, la ou les pistes conductrices 23, sont réalisées préalablement à l'assemblage du corps du lecteur de carte à mémoire. Plus précisément, postérieurement au moulage du couvercle supérieur de protection 20A, une ou plusieurs pistes conductrices sont réalisées. Par exemple, la ou les pistes conductrices prennent la forme d'au moins un circuit de protection 23. Ce circuit de protection 23 peut être un circuit tridimensionnel. Ce circuit de protection 23 se présente par exemple sous la forme d'un ou de plusieurs treillis de détection d'intrusion ou sous la forme d'une ou de plusieurs pistes continues de détection d'intrusion (par exemple un circuit de masse, et deux treillis à des potentiels différents). À la différence de la technique antérieure, ce ou ces circuits de protection 23 sont positionnés sur l'ensemble de la face interne du couvercle supérieur 20A. Le ou les circuits de protection peuvent prendre plusieurs formes, comme par exemple une gravure, une piste de cuivre collée ou encore un circuit imprimé flexible. Ceci présente deux avantages au moins. Le premier réside dans la surface protégée. En effet, avec les solutions de l'art antérieur, seule la surface qui se trouvait au-dessus du connecteur de carte à mémoire comprenait une piste de protection Il en résulte qu'une partie importante de cette surface ne comprenait aucune protection, ce qui pouvait potentiellement poser un problème de sécurité. Avec la solution apportée par les inventeurs, il est possible de protéger une surface beaucoup plus étendue. Dès lors, la sécurité apportée par le corps de lecteur de carte à mémoire est meilleure.

Avantageusement, en plus de la face interne du couvercle supérieur 20A, les faces latérales internes du couvercle supérieur 20A sont également munies d'un circuit de protection additionnel. Ce circuit de protection additionnel permet d'éviter une tentative d'intrusion qui serait réalisée par un côté du corps de lecteur. Le mode opératoire d'introduction frauduleuse serait sensiblement le même que celui décrit précédemment, à la différence que le perçage serait réalisé par le côté du corps du lecteur. Ce cas est relativement théorique puisque réaliser un tel perçage, sur le côté, est une opération demandant des moyens techniques très importants qui ne sont généralement pas à la portée des fraudeurs.

Selon un mode de réalisation spécifique, le corps de lecteur de carte à mémoire 20 comprend également une feuille de protection 20C.

Selon la présente technique, le couvercle supérieur 20A du corps du lecteur de carte à mémoire 20, dans un mode de réalisation particulier de l'invention est une pièce dite MID (de l'anglais pour *« Moulded Interconnect Device »*). Plus particulièrement, le couvercle supérieur 20A MID permet de protéger deux surfaces en parties opposées. En effet, une gravure au laser est réalisée afin de produire des pistes électroniques en trois dimensions.

Dans un mode de réalisation, la pièce en LDS (de l'anglais pour *« Laser Direct Structuring »*), possède une surface interne qui est adaptée à la forme du connecteur 10 d'une part et à la distance minimale nécessaire au passage de la carte à puce d'autre part, ce qui permet de réaliser une protection complète en MID, dans toutes les directions. La gravure MID permet de réaliser un ou plusieurs treillis, le(s)dit(s) treillis étant classiquement une protection permettant de détecter l'insertion d'un dispositif dans le corps du lecteur de carte à mémoire. L'utilisation d'un treillis pour détecter une insertion ou une tentative de perçage est une technique connue dans le domaine de l'invention. Cependant, à la différence de l'art antérieur, l'invention intègre directement le treillis en surface interne du connecteur de carte à mémoire d'une façon très intégrée et sur l'ensemble (ou sur une partie significative) de la surface du couvercle supérieur 20A du corps du lecteur de carte à mémoire 20.

À la différence de la technique antérieure, cependant, il n'est pas nécessaire de réaliser la gravure laser en utilisant une technique de gravure complexe. En effet, cette gravure est réalisée dans les trois dimensions afin de se conformer au volume du connecteur de carte à mémoire, mais directement sur la face interne du couvercle supérieur. Le processus de définition du circuit de protection est, dès lors, nettement facilité, sans que le degré de protection offert, au final, par le corps du lecteur de carte à mémoire en soit réduit, au contraire : en étendant le circuit de protection sur toute la surface interne du couvercle supérieur, la protection offerte est meilleure.

De plus, la zone de protection étendue, n'a pas besoin d'être à un pas aussi fin que la protection directe (celle au-dessus des signaux directs). Ceci permet, à coût réduit, d'augmenter significativement le niveau de protection du couvercle supérieur.

Par la suite, on décrit un mode de réalisation spécifique de l'invention. Il est entendu que ce mode de réalisation ne limite en rien la portée de l'invention. Plus particulièrement, dans d'autres modes de réalisation de l'invention il est possible de protéger le connecteur de carte à mémoire en utilisant d'autres moyens de gravure de pistes électriques que ceux décrits par la suite (par exemple, un circuit flexible collé à l'intérieur du corps du lecteur).

### 5.2. Description détaillée d'un mode de réalisation

Dans ce mode de réalisation de l'invention, un circuit de protection interne (par exemple un treillis de protection) est positionné dans le couvercle supérieur du corps du lecteur de carte à mémoire. Dans ce mode de réalisation, le circuit de protection se présente sous la forme de pistes électriques intégrées sur la face interne du couvercle supérieur 20A du corps du lecteur de carte à mémoire 20. À la différence de l'art antérieur, la surface couverte par le circuit est nettement plus importante et permet de sécuriser le corps du lecteur de manière plus efficace. Comme explicité précédemment, les technologies MID et LDS sont par exemple mises en œuvre, sans préjudice de l'utilisation d'autres techniques qui pourraient être plus appropriées.

Ce mode de réalisation est présenté plus particulièrement en relation avec les figures 3b à 10. Ce mode de réalisation comprend des caractéristiques non décrites précédemment. En revanche, des références numériques identiques sont utilisées pour les éléments qui ont déjà été décrits dans les figures 2 et 3.

Dans ce mode de réalisation, le corps du lecteur de carte à mémoire 20 est une pièce de forme globalement parallélépipédique rectangle, d'une largeur d'environ soixante millimètres, d'une profondeur d'environ quarante millimètres et d'une hauteur d'environ quatre millimètres. Le corps du lecteur de carte à mémoire 20 comprend une fente d'insertion 30, d'une hauteur comprise entre 0.8 et 1.5 millimètres. La fente d'insertion 30 permet d'insérer la carte à mémoire dans une position correcte pour qu'elle entre en contact avec le connecteur de carte à mémoire 10. Le lecteur de carte à mémoire comprend également, sur sa face postérieure 21, un logement 22, destiné à recevoir et à recouvrir le connecteur de carte à mémoire 10. La forme volumique de ce logement de réception22 est sensiblement complémentaire à la forme volumique du connecteur de carte à mémoire 10, moyennant bien entendu l'espace nécessaire à la présence de la carte à mémoire, ainsi qu'à d'éventuels autres composant électroniques.

Dans ce mode de réalisation, deux densités de treillis sont mises en œuvre. Plus particulièrement, comme décrit sur la figure 4, une zone à *« forte densité »* (23A) correspond à une protection immédiate (perçage direct au-dessus du connecteur pour accès aux signaux sensibles). Une zone de plus « Faible densité » (23B) correspond à une protection par des attaques indirectes (perçage, puis introduction d'objets en biais pour accéder aux signaux sensibles, tel que décrit précédemment). Une telle solution est avantageuse car elle permet de réduire le cout de fabrication de la pièce sans toutefois nuire à la sécurité. Comme indiqué précédemment, le treillis de protection de plus faible densité peut s'étendre également sur les parois (latérales et longitudinales) (23C, 23D) de la face interne du couvercle supérieur (20A).

Dans ce mode de réalisation, le circuit de protection 23, apposé ou gravé sur la face interne du couvercle supérieur 20A est recouvert d'une feuille de protection 20C. Cette feuille de protection 20C a pour fonction de protéger le circuit de protection 23 de tout contact et de toute altération par une carte à mémoire. En effet, un problème accessoire qui peut se poser avec la solution de l'invention trouve son origine dans les éventuelles insertions d'objets frauduleux par la fente d'insertion de carte 30. Or, s'il advenait qu'un tel objet détériore le circuit de protection, cela pourrait engendrer au moins deux problèmes : une altération du circuit de protection, et donc le déclenchement inopiné de la protection correspondante (par exemple mise hors service du terminal) et/ou une décharge électrostatique de la carte directement dans le circuit de protection (aboutissant au même résultat).

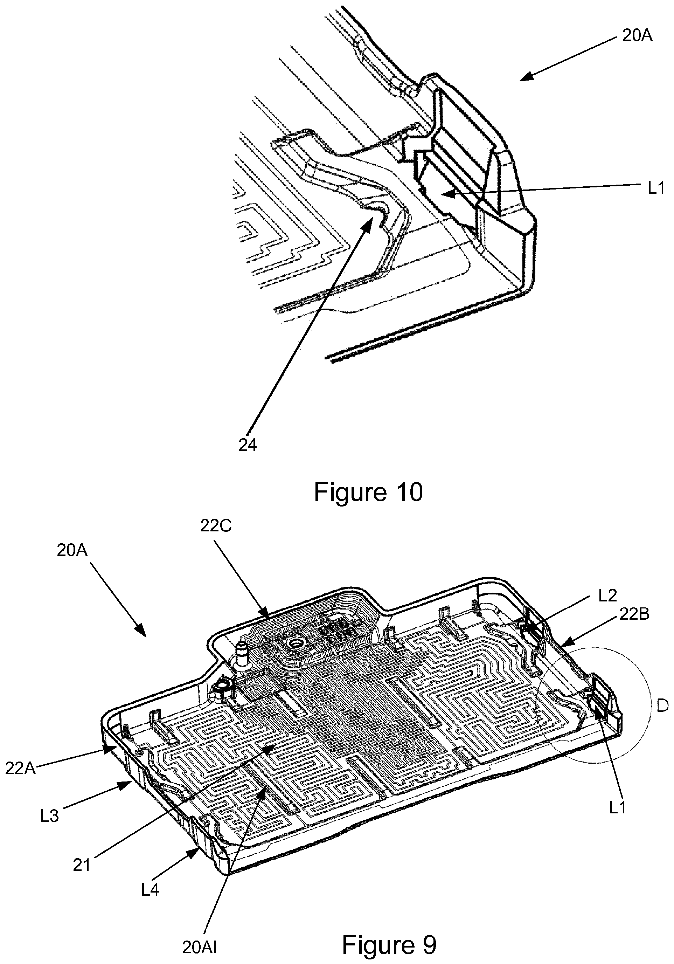

Dans ce mode de réalisation, des zones relativement fragiles, en vis-à-vis des pins de solidarisation, permettent d'éviter à toute personne mal intentionnée, d'ouvrir le lecteur, sans casser le couvercle supérieur, autour duquel sont tracées des signaux actifs. Une de ces zones de fragilité (24) est présentée en relation avec la figure 10 qui présente une portion de la face interne du couvercle supérieur 20A.

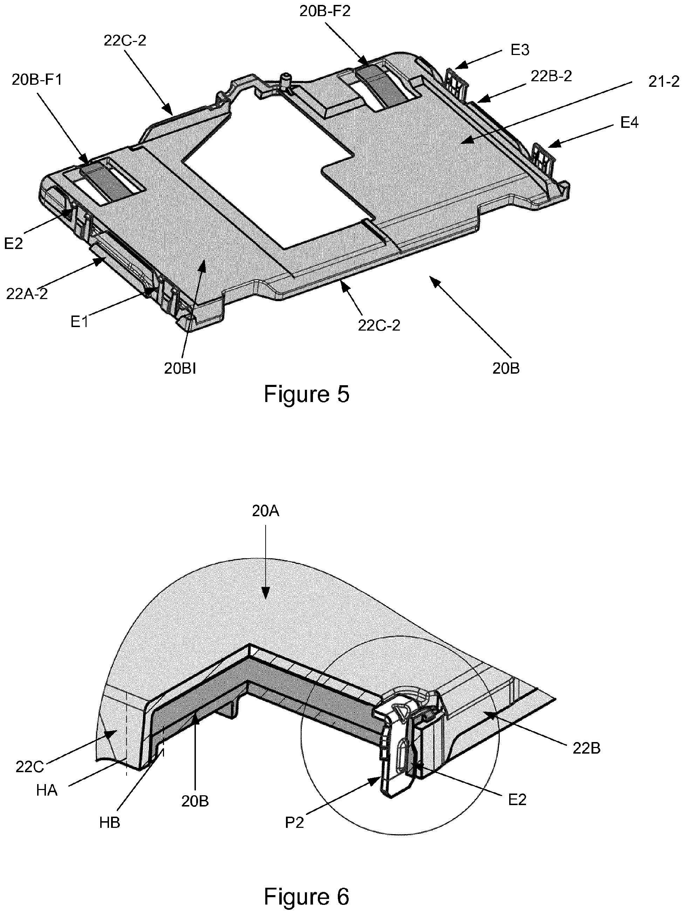

Dans ce mode de réalisation, le couvercle inférieur 20B du corps du connecteur a fonction principale d'assurer le guidage de la carte lors de son insertion dans le lecteur de carte à mémoire. En outre, de manière astucieuse, et encore contrairement à la technique antérieure, dans au moins une variante, le couvercle inférieur 20B comprend une ou plusieurs des caractéristiques suivantes :
- intègre des freins de carte (permettant d'éviter les chocs sur les butées cartes ; de tels freins de carte sont présentés, à titre d'exemple, sur le couvercle inférieur illustré en figure 5 (20B-F1, 20B-F2) : les freins de carte sont constitués, dans ce mode de réalisation, de deux lamelles de matière plastique ; chacune de ces lamelles forme chacune un angle prédéterminé par rapport à la surface (plane) de guidage de la carte à mémoire; en fonction des mode de réalisation, l'angle d'inclinaison d'une lamelle peut être différent de l'angle d'inclinaison de l'autre lamelle ; dans ce mode de réalisation, les freins sont positionnés de chaque côté du couvercle ; d'autres modes de positionnement sont bien entendus envisageables ;
- est réalisé dans une matière dissipative, ce qui permet de limiter les effets de décharges électrostatiques, sur un terminal, tout en évitant que cette la pièce dissipative ne mette pas en court-circuit les circuits de protection du couvercle supérieur 20A ; cette caractéristique de décharge électrostatique peut être couplée à la caractéristique précédente : les lamelles, chacune avec une inclinaison différente, sont à même de freiner la carte d'une part et de la décharger de son électricité statique d'autre part, de manière progressive ;
- est réalisé dans une matière transparente, ou translucide, pour permettre d'éclairer la fente de façon homogène (accueil de la carte) ;
- comprend un circuit de protection, sur sa face interne, de la même manière que le couvercle supérieur 20A.

Ces caractéristiques complémentaires découlent astucieusement de la mise en oeuvre d'un corps de lecteur en deux parties emboitables. En effet, de telles caractéristiques ne peuvent pas être mise en oeuvre avec un corps de lecteur en une seule et unique partie car la technicité de ces caractéristique l'en empêche. Ainsi, par exemple, il serait très compliqué (et couteux) de réaliser un corps de lecteur qui comprendrait une portion transparente et une portion opaque.

Dans un mode de réalisation, le couvercle supérieur 20A est emboité avec le couvercle inférieur 20B, afin de former le corps du lecteur de carte à mémoire. Plus précisément, le couvercle a globalement une forme parallélépipédique rectangle, avec une surface principale (21), deux parois latérales (22A, 22B) et une paroi globalement longitudinale (22C). Le couvercle comprend une face interne (20AI) et une face externe. Le circuit de protection est disposé sur la face interne (20AI) du couvercle supérieur 20A. Il comprend également, dans ce mode de réalisation, sur chacune des parois latérales, deux lumières (L1, L2, L3, L4) dont l'axe traversant est parallèle au plan définissant chaque paroi latérale (20A, 20B). Plus particulièrement, les parois latérales et la paroi longitudinale sont solidarisées à la surface principale par l'intermédiaire d'un pan coupé, le pan coupé comprend, au niveau des parois latérales, au moins une lumière d'assemblage (L1, figure 10). Ces lumières, comme cela est exposé postérieurement, sont destinées à recevoir des pions de blocage (P1, P2, P3, P4) et des ergots de solidarisation (E1, E2, E3, E4).

Le couvercle inférieur 20B, tout comme le couvercle supérieur 20A, est de forme globalement parallélépipédique rectangle. Il comprend également une surface principale (21-2), deux parois latérales (22A-2, 22B-2) et deux parois globalement longitudinale (22C-2). La face interne (20BI) est la face en contact avec la carte à mémoire lors de son insertion dans le terminal : cette face interne est donc globalement lisse. La face externe est la face qui est en contact avec le circuit imprimé du lecteur de carte. Cette face externe est structurée afin d'accueillir notamment des composants électroniques qui sont soudés sur le circuit imprimé du lecteur de carte et que le couvercle inférieur 20B vient recouvrir, assurant ainsi une certaine protection physique de ces composants. Ainsi, la hauteur des parois latérales et longitudinales est adaptée à la hauteur des composants électroniques qui prennent place sous le couvercle inférieur 20B.

Comme indiqué précédemment, lors du montage, le couvercle supérieur est placé sur le couvercle inférieur afin de former un bloc unitaire. Pour que ce montage soit effectué de manière simple et efficace (notamment en terme de centrage, de précision de montage), le couvercle inférieur (20B) comprend, dans ce mode de réalisation, quatre ergots de solidarisation (E1, E2, E3, E4), qui sont positionnés de sorte qu'ils pénètrent, lors de l'assemblage, dans les lumières (L1, L2, L3, L4) correspondantes du couvercle supérieur 20A. Cela suppose notamment, comme c'est le cas en l'espèce, que la surface du couvercle inférieur soit légèrement inférieure à celle du couvercle supérieur : l'objectif étant que le couvercle supérieur recouvre intégralement le couvercle inférieur, et ainsi, permettre d'avoir un treillis de protection le plus complet possible. À côté de chaque ergot de solidarisation, une lumière est également présente ; la taille de celle-ci est légèrement inférieure à la lumière (L1, L2, L3, L4) correspondante du couvercle supérieur 20A. Cette deuxième lumière, qui se situe en regard de la lumière correspondante du couvercle supérieur 20A est destinée à recevoir le même pion de blocage que celui qui est inséré dans le couvercle supérieur, comme cela est explicité par la suite.

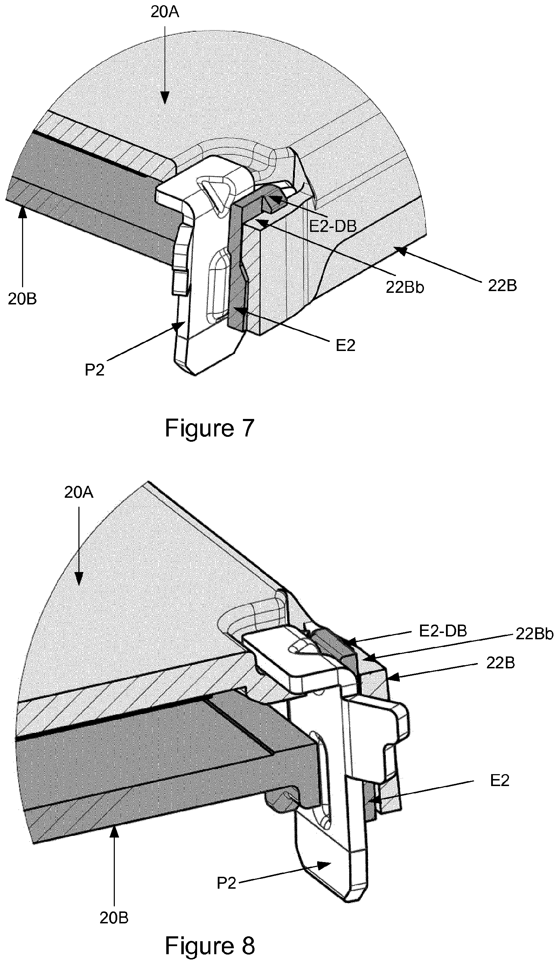

Les figures 6 à 8 décrivent plus précisément les éléments qui permettent le montage du corps du lecteur de carte à mémoire 20 sur un circuit imprimé (PCB). Plus particulièrement, le couvercle supérieur 20A est enfiché sur le couvercle inférieur 20B.
- la figure 6 est une vue de coupe illustrant, dans ce mode de réalisation, la manière dont le couvercle supérieur 20A s'emboite dans le couvercle inférieur 20B ; sur la partie gauche de la figure, on note que la hauteur des parois du couvercle supérieur (HA) est adaptée de sorte à recouvrir toute ou partie de la paroi du couvercle inférieur; la hauteur de paroi du couvercle supérieur (HA) est égale à la hauteur de paroi du couvercle inférieure (HB) à laquelle on additionne une hauteur réglementaire pour l'épaisseur de la carte à mémoire ;
   en partie droite de la figure 6, on distingue également l'assemblage d'un ergot de solidarisation (E2) et d'un pion de blocage (P2) ; cet assemblage est visible plus nettement sur les figure 7 et 8 ;
- la figure 7 est une vue de coupe d'une portion du couvercle inférieur et du couvercle supérieur au niveau d'une lumière de ces deux couvercles : plus particulièrement, il est exposé un pion de blocage (P2) qui traverse les deux lumières et qui, de par sa forme, exerce une pression sur l'ergot de solidarisation (E2) afin que celui-ci soit plaqué sur la paroi latérale (22B) du couvercle supérieur (20A) ; cette forme spécifique est un renflement (embouti) dans le pion de blocage ; la pression exercée permet de positionner une dent de blocage (E2-DB) sur un rebord (22-Bb) de la paroi du couvercle supérieur; ceci créé ce qui est appelé un embouti ;
- cet embouti est à l'extérieur du chemin de passage carte. Ainsi, son encombrement est minime, car il se retrouve sous l'ergot de solidarisation, et la carte reste frottante sur la surface plane ;
- d'une façon avantageuse, cet embouti permet d'ajouter une raideur non négligeable au pion d'ancrage, ce qui est très intéressant pour permettre de résister aux différentes sollicitations mécaniques d'un lecteur de carte à puce.
- La figure 8 présente les mêmes éléments que ceux de la figure 7, selon un angle de vue différent.

Lors de l'assemblage final, sur le circuit imprimé, les pions de blocage sont soudés sur le circuit imprimé du lecteur de carte à mémoire. Le pli, à 90°, sur le dessus du pion de blocage permet de verrouiller l'ensemble. Ainsi, même un connecteur cisaillé par l'usure ne peut pas s'ouvrir.

Ce pli a aussi une fonction assurant la sécurité : si on tente d'ouvrir le connecteur sans le dessouder, une zone de faiblesse (24, figure 10), en vis-à-vis de ce pli, oblige à multiplier les précautions, pour ne pas détruire le treillis.

Le mode de réalisation présenté ci-dessus, pour l'assemblage et la solidarisation du bloc comprend des caractéristiques qui peuvent être inversées et/ou combinées selon les contraintes opérationnelles et techniques : il est par exemple envisageable que le couvercle supérieur soit muni des ergots de solidarisation à la place du couvercle inférieur, voire que les ergots de solidarisation soient répartis entre le couvercle supérieur et le couvercle inférieur.

Par ailleurs, l'ensemble des caractéristiques présentées dans ce mode de réalisation sont bien entendues combinables de manière individuelles ou groupées avec le principe général précédemment décrit sans sortir de la définition de ce qu'est l'invention.

### 5.3. Caractéristiques complémentaires

Selon une autre caractéristique, afin d'éviter la problématique de la soudure du treillis de protection (sur la face interne du corps du connecteur de carte à mémoire) sur le PCB, la connexion entre ces deux éléments est réalisée par l'intermédiaire d'un connecteur élastomère, par exemple de type Zebra (Marque déposée). Ainsi, il n'est pas nécessaire de disposer d'un mécanisme complexe de soudure du corps de lecteur de carte à mémoire sur le PCB : en effet, comme la connexion est assurée par l'intermédiaire d'un connecteur élastomère, le montage de l'ensemble connecteur de carte à mémoire, connecteur élastomère et corps de lecteur de carte à mémoire est facilité.

Plus généralement, pour faciliter le montage, les étapes suivantes sont mises en œuvre :
- une étape de fixation du connecteur de carte à mémoire sur le PCB ; cette fixation peut être réalisée par vissage ou par soudure ou par collage ou par une combinaison de ces méthodes ; d'autres méthodes de fixation peuvent également être employées. ;
- une étape de pose du connecteur élastomère (lorsqu'il est employé). Le positionnement du connecteur élastomère peut avantageusement être réalisé dans une zone laissée libre à cet effet au sein du connecteur de carte à mémoire ;
- une étape d'assemblage du corps du lecteur de carte à mémoire en positionnant le couvercle supérieur sur le couvercle inférieur et en insérant les pions de blocage permettant d'obtenir un corps de lecteur unitaire pouvant être posé immédiatement ;
- une étape de pose et de fixation du corps du lecteur de carte à mémoire, avec un mode de fixation du corps du lecteur par rapport au PCB. Dans le cas d'un Zebra, une vis se prenant dans une partie du connecteur de carte à mémoire est une solution avantageuse, ou encore l'ajout d'une cinquième PIN faisant office de maintien mécanique.

Ainsi, il ne faut que deux ou trois étapes pour assembler et fixer le lecteur de carte à mémoire sur le PCB.

### 5.4. Description d'un mode de réalisation d'un lecteur de carte à mémoire

Dans ce mode de réalisation, le lecteur de carte à mémoire comprend un corps de lecteur de carte à mémoire, un connecteur de carte à mémoire et un connecteur élastomère. Le connecteur de carte à mémoire est architecturé de sorte qu'il comprenne un espace laissé libre pour le positionnement du connecteur élastomère. Ainsi, lors de l'assemblage le connecteur de carte à mémoire est d'abord fixé sur le PCB, puis le connecteur élastomère est inséré dans l'espace. Le corps du lecteur de carte à mémoire est ensuite positionné par-dessus l'ensemble formé par le connecteur de carte à mémoire et le connecteur élastomère. Comme cela a déjà été mentionné, le corps du connecteur de carte à mémoire comprend une zone de décharge de la carte. Le connecteur de carte à mémoire est fixé au par l'intermédiaire d'une vis et de quatre pions d'ancrage. La vis sert également à assurer une pression permanente dans le temps. La vis se visse dans le connecteur carte à mémoire, qui est lui-même fixé au PCB par soudure. La liaison est donc directe. Les pions d'ancrage ont une forme particulière, adaptée d'une part pour remplir une fonction de guidage de la carte à mémoire dans le lecteur et d'autre part pour réaliser, si besoin, une décharge électrostatique des arêtes de la carte insérée.

De plus, dans ce système, les centrages entre le connecteur de carte à mémoire et le corps du lecteur de carte à mémoire permettent de se positionner de façon rigoureuse.

En effet, dans ce mode de réalisation, le connecteur de carte à mémoire comprend au moins deux orifices de centrage. Les orifices de centrage sont configurés de sorte que des plots de centrage, qui sont intégrés au corps du lecteur de carte à mémoire, puissent prendre place dans ces orifices de centrage. Ainsi, dans ce mode de réalisation, il n'est pas possible de réaliser un mauvais montage du lecteur de carte à mémoire. Plus particulièrement, il n'est pas possible de placer le corps du lecteur de carte à mémoire avec un angle incorrect pas rapport au connecteur.

## Revendications

1. Corps de lecteur de carte à mémoire (20) de forme globalement parallélépipédique rectangle comprenant une fente d'insertion (30) d'une carte à mémoire, le corps de lecteur comprenant en outre un logement de réception (22) d'un connecteur de carte à mémoire (10), au moins un circuit de protection (23), un couvercle supérieur (20A) et un couvercle inférieur (20B), ledit couvercle supérieur (20A) et ledit couvercle inférieur (20B) étant deux parties distinctes emboitables l'une dans l'autre, ledit circuit de protection (23) étant positionné sur la face interne du couvercle supérieur (20A), ledit circuit de protection (23) se présentant sous la forme d'au moins un treillis, ledit corps de lecteur de carte mémoire (20) étant **caractérisé en ce que** la densité de gravure du circuit de protection (23) est variable, en fonction de la localisation du circuit de protection.

2. Corps de lecteur de carte à mémoire, selon la revendication 1, **caractérisé en ce que** le circuit de protection (23) s'étend sensiblement sur toute la surface de la face interne du couvercle supérieur (20A).

3. Corps de lecteur de carte à mémoire, selon la revendication 1 **caractérisé en ce que** le couvercle supérieur (20A) est de forme globalement parallélépipédique rectangle comprenant une surface principale, deux parois latérales et une paroi longitudinale, les parois latérales et la paroi longitudinale étant solidarisées à la surface principale par l'intermédiaire d'un pan coupé, le pan coupé comprenant, au niveau de chacune des parois latérales, au moins une lumière d'assemblage.

4. Corps de lecteur de carte à mémoire, selon la revendication 1 **caractérisé en ce que** le couvercle inférieur (20B) est de forme globalement parallélépipédique rectangle comprenant une surface principale, deux parois latérales et une paroi longitudinale et **en ce qu'**il comprend, au niveau de chaque paroi latérale, au moins un ergot de solidarisation, qui est positionné en regard d'une lumière correspondante du couvercle supérieur (20A).

5. Corps de lecteur de carte à mémoire, selon la revendication 3 et la revendication 4, **caractérisé en ce que** le couvercle inférieur (20B) est conformé pour s'emboiter dans le couvercle supérieur (20A), chaque ergot de solidarisation du le couvercle inférieur (20B) prenant place dans une lumière d'assemblage correspondante couvercle supérieur (20A), l'ensemble formé par le couvercle supérieur (20A) et le couvercle inférieur (20B) étant maintenu par l'insertion, dans chaque lumière d'assemblage, d'un pion de blocage.

6. Corps de lecteur de carte à mémoire, selon la revendication 1 **caractérisé en ce que** le couvercle inférieur (20B) comprend au moins un dispositif de freinage de carte.

7. Corps de lecteur de carte à mémoire, selon la revendication 1 **caractérisé en ce que** le couvercle inférieur (20B) comprend au moins une zone de décharge électrostatique.

8. Corps de lecteur de carte à mémoire selon la revendication 3, **caractérisé en ce que** ledit circuit de protection (23) est réalisé par une technique de gravure au laser.

9. Corps de lecteur de carte à mémoire, selon la revendication 1, **caractérisé en ce que** le couvercle supérieur (20A) comprend au moins une zone de fragilité (24) configurée pour être rompue lors d'une extraction non autorisée dudit couvercle supérieur (20A).

10. Corps de lecteur de carte à mémoire selon la revendication 3, **caractérisé en ce que** ledit circuit de protection (23) est un circuit imprimé flexible positionné au sein dudit logement de réception.

11. Terminal de lecture de carte à mémoire **caractérisé en ce qu'**il comprend un corps de lecteur de carte à mémoire (20) selon l'une des revendications 1 à 10.

## Patentansprüche

1. Speicherkartenleserkörper (20) von im Allgemeinen parallelepipedischer rechteckiger Form, umfassend einen Einsteckschlitz (30) einer Speicherkarte, wobei der Leserkörper ferner ein Gehäuse zur Aufnahme (22) eines Speicherkartenanschlusses (10), mindestens eine Schutzschaltung (23), eine obere Abdeckung (20A) und eine untere Abdeckung (20B) aufweist, wobei die obere Abdeckung (20A) und die untere Abdeckung (20B) zwei separate Teile sind, die aufeinander gesteckt werden können, wobei die Schutzschaltung (23) auf der Innenseite der oberen Abdecken (20A) angeordnet ist, wobei die Schutzschaltung (23) die Form von mindestens einem Gitter aufweist, wobei der Speicherkartenleserkörper (20) **dadurch gekennzeichnet ist, dass** die Ätzdichte der Schutzschaltung (23) in Abhängigkeit von der Position der Schutzschaltung variabel ist.

2. Speicherkartenleserkörper nach Anspruch 1, **dadurch gekennzeichnet, dass** sich die Schutzschaltung (23) im Wesentlichen auf der gesamten Fläche der Innenseite der oberen Abdeckung (20A) erstreckt.

3. Speicherkartenleserkörper nach Anspruch 1, **dadurch gekennzeichnet, dass** die obere Abdeckung (20A) von im Allgemeinen parallelepipedischer rechteckiger Form ist, umfassend eine Hauptfläche, zwei Seitenwände und eine Längswand, wobei die Seitenwände und die Längswand über eine schräge Kante mit der Hauptfläche fest verbunden sind, wobei die schräge Kante an jeder der Seitenwände mindestens eine Montageöffnung aufweist.

4. Speicherkartenleserkörper nach Anspruch 1, **dadurch gekennzeichnet, dass** die untere Abdeckung (20B) von im Allgemeinen parallelepipedischer rechteckiger Form ist, umfassend eine Hauptfläche, zwei Seitenwände und eine Längswand, und dass sie an jeder Seitenwand mindestens einen Befestigungssporn aufweist, der gegenüberliegend von einer entsprechenden Öffnung der oberen Abdeckung (20A) angeordnet ist.

5. Speicherkartenleserkörper nach Anspruch 3 und nach Anspruch 4, **dadurch gekennzeichnet, dass** die untere Abdeckung (20B) ausgebildet ist, um auf die obere Abdeckung (20A) gesteckt zu werden, wobei jeder Befestigungssporn der unteren Abdeckung (20B) in einer entsprechenden Montageöffnung der oberen Abdeckung (20A) angeordnet wird, wobei die Anordnung, die von der oberen Abdeckung (20A) und der unteren Abdeckung (20B) gebildet ist, durch Einfügen eines Blockierstifts in jede Montageöffnung gehalten wird.

6. Speicherkartenleserkörper nach Anspruch 1, **dadurch gekennzeichnet, dass** die untere Abdeckung (20B) mindestens eine Kartenbremsvorrichtung aufweist.

7. Speicherkartenleserkörper nach Anspruch 1, **dadurch gekennzeichnet, dass** die untere Abdeckung (20B) mindestens einen Bereich der elektrostatischen Entladung aufweist.

8. Speicherkartenleserkörper nach Anspruch 3, **dadurch gekennzeichnet, dass** die Schutzschaltung (23) durch eine Technik des Laserätzens erstellt ist.

9. Speicherkartenleserkörper nach Anspruch 1, **dadurch gekennzeichnet, dass** die obere Abdeckung (20A) mindestens einen Brüchigkeitsbereich (24) aufweist, der konfiguriert ist, um bei einem unbefugten Entfernen der oberen Abdeckung (20A) gebrochen zu werden.

10. Speicherkartenleserkörper nach Anspruch 3, **dadurch gekennzeichnet, dass** die Schutzschaltung (23) eine flexible gedruckte Schaltung ist, die im Inneren des Gehäuses zur Aufnahme angeordnet ist.

11. Speicherkartenleser-Terminal, **dadurch gekennzeichnet, dass** es einen Speicherkartenleserkörper (20) nach einem der Ansprüche 1 bis 10 aufweist.

## Claims

1. Memory card reader body 20, having a generally rectangular parallelepiped shape, comprising a slot 30 for inserting a memory card, the reader body furthermore comprising a housing 22 for receiving a memory card connector 10, and at least one protection circuit 23, and an upper lid 20A and a lower lid 20B, said upper lid 20A and said lower lid 20B being two distinct parts that can be fitted with each other, said protection circuit being positioned on the internal face of the upper lid 20A, said protection circuit 23 takes the form of at least one lattice, memory card reader body 20 the Memory card reader body 20 being **characterized in that** the etching density of the protection circuit 23 is variable according to the location of the protection circuit.

2. Memory card reader body according to claim 1, **characterized in that** the protection circuit 23 extends appreciably throughout the surface of the internal face of the upper lid 20A.

3. Memory card reader body according to claim 1, **characterized in that** the upper lid 20A has a generally rectangular parallelepiped shape comprising a main surface, two side walls and one longitudinal wall, the side walls and the longitudinal wall being fixedly attached to the main surface by means of a cut-off edge, the cut-off edge comprising, at each of the side walls, at least one assembling aperture.

4. Memory card reader body according to claim 1, **characterized in that** the lower lid 20B has a generally rectangular parallelepiped shape comprising a main surface, two side walls and one longitudinal wall, and **in that** it comprises, at each side wall, at least one fastening lug that is positioned so as to be facing a corresponding aperture of the upper lid 20A.

5. Memory card reader body according to claim 3 and claim 4, **characterized in that** the lower lid 20B is shaped so as to fit together with the upper lid 20A, each fastening lug of the lower lid 20B taking position in a corresponding assembling aperture of the upper lid 20A, the unit formed by the upper lid 20A and the lower lid 20B being held by the insertion, into each assembling aperture, of a locking pin.

6. Memory card reader body according to claim 1, **characterized in that** the lower lid 20B comprises at least one card-braking device.

7. Memory card reader body according to claim 1, **characterized in that** the lower lid 20B comprises at least one electrostatic discharge zone.

8. Memory card reader body according to claim 3, **characterized in that** said protection circuit 23 is made by a laser-etching technique.

9. Memory card reader body according to claim 1, **characterized in that** the upper lid (20A) comprises at least one brittle zone (24) configured to be broken when there is an unauthorized extraction of said upper lid (20A).

10. Memory card reader body according to claim 3, **characterized in that** said protection circuit 23 is a flexible printed circuit board positioned within said housing for receiving.

11. Memory card reader terminal **characterized in that** it comprises a memory card reader body 20 according to one of the claims 1 to 10.
